# FASCICULE DE BREVET EUROPEEN

(11) **EP 2 154 024 B1**
(45) Date de publication et mention de la délivrance du brevet: **29.12.2010**
(21) Numéro de dépôt: 09165639.7
(22) Date de dépôt: 16.07.2009
(51) Int. Cl.: B60Q 1/04

(54) **Système d'indexage d'un organe éclairant sur un véhicule automobile**
Indexierungssystem eines Beleuchtungsorgans auf einem Kraftfahrzeug
Indexing system of an automotive lighting element

(30) Priorité: 04.08.2008 FR 0855380
(43) Date de publication de la demande: 17.02.2010
(73) Titulaire: PEUGEOT CITROËN AUTOMOBILES SA, 78140 Vélizy Villacoublay (FR)
(72) Inventeur: Tanguy, Thierry, 75020, PARIS (FR); Mas, Christophe, 78280, GUYANCOURT (FR); Laviolette, Julien, 78330, FONTENAY LE FLEURY (FR)
(74) Mandataire: Allain, Laurent

(56) Documents cités:
- EP-A- 1 491 401
- DE-A1-102004 017 360
- FR-A- 2 746 728
- FR-A- 2 783 774
- US-A1- 2005 169 002
- US-B1- 6 695 396

## Description

Le domaine technique de l'invention concerne un système d'indexage d'un dispositif d'éclairage de véhicule automobile, comme un projecteur. L'invention porte également sur un projecteur, doté d'un organe d'indexage spécifique.

Les systèmes d'indexage et de fixation d'un projecteur sur un véhicule automobile existent et ont déjà fait l'objet de plusieurs brevets. On peut, par exemple, citer le brevet FR 2620090, qui se rapporte à un système de fixation d'un dispositif d'éclairage ou de signalisation d'un véhicule automobile. Cette fixation s'effectue au moyen d'un bras élastique, comportant à son extrémité un ergot apte à se loger dans un évidement, ménagé dans un élément support de la carrosserie, en reprenant sa forme initiale. La caractéristique marquante de ce système d'indexage et de fixation, est qu'il comprend un ressort de renfort, disposé en appui contre le bras élastique et contre une paroi du boitier du projecteur, ledit ressort ayant pour fonction de plaquer ce bras contre l'élément support de carrosserie.

Le brevet FR 2783 774 divulgue un système d'indexage d'un projecteur sur un élément de carrosserie d'un véhicule automobile, ledit projecteur comprenant un boitier et une glace, et ledit système d'indexage mettant en oeuvre un organe d'indexage doté d'un pion, apte à venir s'insérer dans un trou de l'élément de carrosserie. L'organe d'indexage est monobloc et comprend une patte flexible, apte à se déformer lors de l'introduction de l'organe d'indexage dans le trou, pour déplacer le projecteur jusqu'à ce que la glace vienne au contact de l'élement de carrosserie.

Les systèmes d'indexage d'un projecteur sur un véhicule selon l'invention, permettent de positionner au plus juste le projecteur sur la caisse, en atteignant progressivement le contact entre ledit projecteur et ladite caisse. Cette performance est atteinte au moyen d'un organe d'indexage unique, assurant à la fois une fonction de pré positionnement du projecteur sur la caisse, et une fonction d'ajustement optimisée de sa position sur ladite caisse.

La présente invention a pour objet un système d'indexage d'un projecteur sur un élément de carrosserie d'un véhicule automobile, ledit projecteur comprenant un boitier et une glace, et ledit système d'indexage mettant en oeuvre un organe d'indexage doté d'un pion apte à venir s'insérer dans un trou de l'élément de carrosserie. La principale caractéristique d'un système d'indexage selon l'invention est que l'organe d'indexage est monobloc et comprend une patte flexible, apte à se déformer lors de l'introduction de l'organe d'indexage dans le trou, pour déplacer le projecteur jusqu'à ce que la glace vienne au contact de l'élément de carrosserie. De cette manière, le pion assure l'indexage du projecteur selon une direction, et la patte flexible permet son positionnement selon une direction perpendiculaire. De façon avantageuse, la patte est conformée de manière à ce que l'insertion, selon une direction, de l'organe d'indexage dans le trou, entraine le déplacement du projecteur dans une direction perpendiculaire. A titre d'exemple, l'insertion de l'organe dans le trou selon une direction verticale, entraine le déplacement du projecteur selon une direction horizontale. Le fait que la glace du projecteur vienne au contact de l'élément de carrosserie, est un gage d'optimisation des jeux et affleurements entre ledit projecteur et ledit élément de carrosserie.

L'organe d'indexage est solidaire du projecteur.

Le projecteur est situé en partie avant de véhicule, et l'élément de carrosserie est une aile du véhicule. Le système d'indexage selon l'invention est particulièrement adapté à cette configuration.

L'organe d'indexage comporte une patte de fixation, parallèle à l'axe longitudinal du véhicule, et située à l'arrière du projecteur, le pion et la patte flexible étant implantés sur ladite patte de fixation, et du même coté. Ainsi, l'organe d'indexage comprend le pion, la patte flexible et ladite patte de fixation. Pour bien comprendre la description, lorsqu'il est fait mention de l'introduction de l'organe d'indexage dans le trou, il s'agit uniquement de l'introduction de la partie constituée par le pion et par la patte flexible.

Préférentiellement, la patte de fixation présente une surface inférieure plane, le pion étant droit et implanté selon une direction perpendiculaire à ladite surface, et la patte flexible prend naissance à l'extrémité libre dudit pion, en étant dirigée vers ladite surface. De cette manière, le pion et la patte forment une pièce en forme de V, le pion s'étendant selon un sens l'éloignant de la surface plane, tandis que la patte flexible s'étend à partir de l'extrémité libre dudit pion, selon un sens la rapprochant de la dite surface.

Avantageusement, le pion et la patte flexible sont alignés selon une direction parallèle à l'axe longitudinal du véhicule, ledit pion et ladite patte faisant entre eux un angle aigu, inférieur à 45°. De cette manière, l'organe d'indexage est introduit dans le trou au niveau de son coude, matérialisé par la jonction du pion et de la patte flexible, cette introduction entrainant la déformation de la patte, qui se rabat vers le pion, et provoquant le déplacement du projecteur vers l'arrière du véhicule, jusqu'à ce que la glace du projecteur vienne en contact avec la pièce de structure, c'est-à-dire, l'aile. Pour cette configuration, le pion assure l'indexage du projecteur selon une direction transversale par rapport à l'axe longitudinal du véhicule, et la patte flexible permet de garantir un positionnement optimisé dudit projecteur selon la direction longitudinale du véhicule.

De façon préférentielle, la patte flexible s'étend entre le pion et le projecteur. Autrement dit, la patte flexible est située en amont du projecteur, et en aval du pion, par rapport au sens d'avancée du véhicule.

De façon avantageuse, la patte flexible présente des aptitudes à la déformation élastique, de sorte qu'elle est apte à se rapprocher du pion au moment de l'insertion de l'organe d'indexage dans le trou, tout en présentant une résistance vis-à-vis de ce déplacement.

Préférentiellement, le pion présente une section étoilée à quatre branches s'inscrivant dans un carré, deux branches consécutives étant perpendiculaires entre elles, et le trou a la forme d'un rectangle, dont les grands cotés sont parallèles à l'axe longitudinal du véhicule, et sont séparés par une distance sensiblement égale au coté du carré. Pour cette configuration, le pion est apte à coulisser dans le trou rectangulaire, en demeurant au contact des bords dudit trou.

Avantageusement, la patte flexible possède une légère incurvation, pour favoriser l'introduction de l'organe dans le trou. De façon plus précise, la patte flexible présente, selon un plan vertical, une section légèrement incurvé, lui conférant une forme de virgule.

Les systèmes d'indexage de projecteurs sur un véhicule automobile selon l'invention, présentent l'avantage, par rapport aux systèmes déjà existants, d'être aussi peu encombrants, tout en assurant une fonction supplémentaire améliorée, qui est celle du déplacement jusqu'à une position optimisée du projecteur sur la caisse. Ils sont, de plus, de conception simple, et ne nécessitent donc pas un outillage complexe et coûteux pour les mettre au point.

On donne ci-après une description détaillée d'un mode de réalisation préféré d'un système d'indexage d'un projecteur de véhicule automobile selon l'invention, en se référant aux figures 1 à 3.
- La figure 1 est une vue partielle, en perspective, d'une partie avant de véhicule automobile, localisant le système d'indexage selon l'invention, entre le projecteur et l'aile.
- La figure 2 est une vue agrandie du système d'indexage de la figure 1.
- La figure 3 est une vue partielle, en coupe axiale longitudinale, d'un organe d'indexage appartenant à un système selon l'invention.

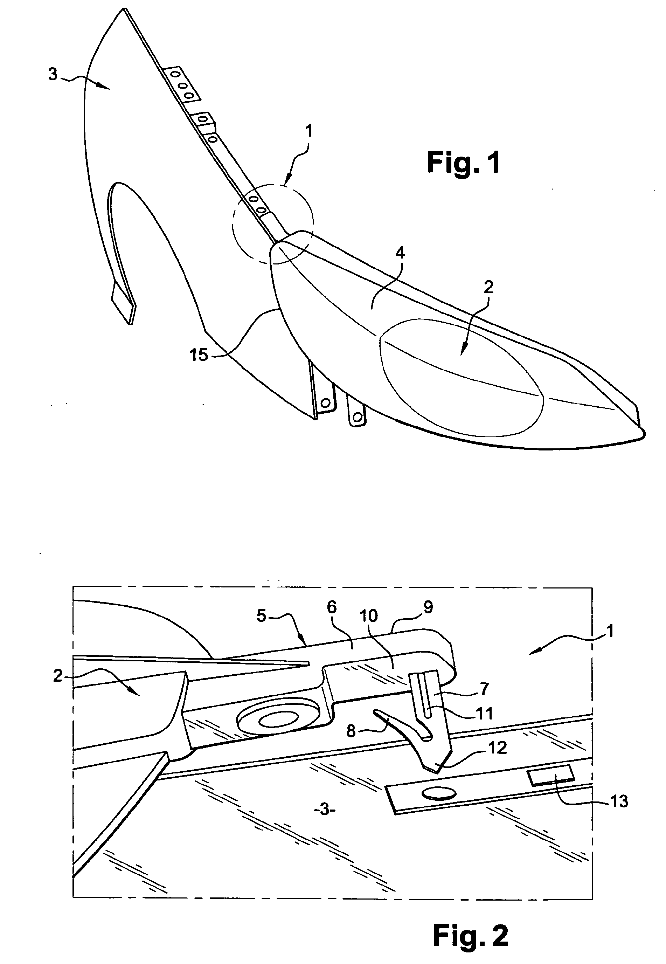

En se référant à la figure 1, un système d'indexage 1 selon l'invention, permet de positionner idéalement un projecteur 2 avant de véhicule automobile, sur une aile 3 avant de ce véhicule automobile. Le projecteur 2 comprend classiquement un boitier (non représenté sur les figures) et une glace 4, le système d'indexage 1 étant solidaire dudit boitier, et étant localisé à l'arrière de celui-ci. La notion d'arrière ou d'avant n'a de sens, que par rapport à l'axe longitudinal du véhicule.

En se référant à la figure 2, un système d'indexage 1 selon l'invention, implique un organe 5 d'indexage, comprenant une patte de fixation 6, s'étendant vers l'arrière du projecteur 2, un pion d'indexage 7 et une patte flexible 8. La patte de fixation 6 est constituée par une pièce allongée de faible épaisseur, présentant une surface supérieure 9 et une surface inférieure 10, parallèles entre elles, le pion 7 étant implanté sur la surface inférieure 10, en étant perpendiculaire à celle-ci. Le pion 7 est matérialisé par une pièce droite, présentant une section étoilée à quatre branches 11 s'inscrivant dans un carré, deux branches 11 successives étant perpendiculaires entre elles. Chaque branche 11 se termine par une extrémité plane, qui est perpendiculaire à son axe longitudinal. La patte flexible 8 prend naissance au niveau de l'extrémité libre du pion 7, et est dirigée vers la surface inférieure 10 de la patte de fixation 6. De cette manière, l'ensemble constitué par le pion 7 et la patte flexible 8 forme une pièce en V, dont l'angle entre les deux segments est inférieur à 45°. Le pion 7 et la patte flexible 8 sont alignés suivant l'axe longitudinal du véhicule, ladite patte flexible 8 s'étendant à la fois vers la surface inférieure 10 de la patte de fixation 6, et vers le projecteur 2. Le coude matérialisant la jonction de la patte flexible 8 avec le pion 7 d'indexage, présente un profil en pointe 12, pour faciliter l'insertion de l'organe d'indexage 5 dans un trou 13 pratiqué dans l'aile avant 3 du véhicule automobile. En effet, le trou 13, dans lequel est inséré l'organe d'indexage 5, est rectangulaire, les deux grands cotés se retrouvant parallèles à l'axe longitudinal du véhicule, et les deux petits cotés se retrouvant perpendiculaires audit axe longitudinal. Les deux grands cotés de ce trou 13 rectangulaire sont séparés par une distance sensiblement égale au coté du cané, dans lequel s'inscrivent les quatre branches 11 du pion 7. De cette manière, le pion 7 peut coulisser longitudinalement dans le trou 13, tout en restant au contact des bords dudit trou 13, ledit pion 7 indexant transversalement le projecteur 2 sur l'aile avant 3. La patte flexible 8 présente, selon un plan vertical, une section légèrement incurvée, lui conférant une forme de virgule.

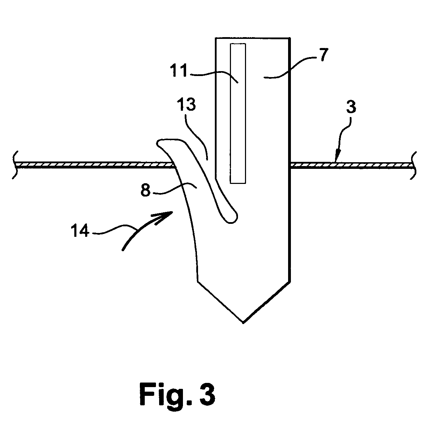

En se référant à la figure 3, l'opération d'indexage s'effectue comme suit. Le projecteur 2 est amené jusqu'à son emplacement sur la caisse du véhicule. L'organe d'indexage 5 est alors manipulé, de manière à introduire, par son coude de jonction, l'ensemble constitué par le pion 7 et par la patte flexible 8, dans le trou 13 rectangulaire de l'aile avant 3, prévu à cet effet. Cette introduction est facilitée, dans un premier temps, par l'extrémité en pointe 12 dudit coude, puis, dans un deuxième temps, par le profil incurvé de la patte flexible 8. Cette introduction s'effectue selon une direction sensiblement verticale, perpendiculaire au plan de l'aile avant 3, dans lequel est réalisé le trou 13, et provoque une déformation de la patte flexible 8, qui se rabat alors vers le pion 7 d'indexage, comme le montre la flèche 14. Ce rapprochement de la patte flexible 8 vers le pion 7 provoque, en réaction de cette dernière contre le bord avant du trou rectangulaire 13,le déplacement du projecteur 2 vers l'arrière du véhicule, selon une direction parallèle à l'axe longitudinal du véhicule. Ce déplacement prend fin, lorsque la glace 4 arrive au contact d'une paroi 15 de l'aile avant 3 du véhicule, prévue notamment pour servir de butée de positionnement du projecteur 2, ce contact correspondant à l'emplacement idéal dudit projecteur 2 sur le véhicule. Le projecteur 2 est ensuite fixé sur la caisse dans cette position.

## Revendications

1. Système d'indexage (1) d'un projecteur (2) sur un élément (3) de carrosserie d'un véhicule automobile, ledit projecteur (2) comprenant un boitier et une glace (4), et ledit système d'indexage mettant en oeuvre un organe d'indexage (5) solidaire du projecteur (2) et doté d'un pion (7), apte à venir s'insérer dans un trou (13) de l'élément (3) de carrosserie, ledit organe d'indexage (5) étant monobloc et comprenant une patte flexible (8), apte à se déformer lors de l'introduction de l'organe d'indexage (5) dans le trou (13), pour déplacer le projecteur (2) jusqu'à ce que la glace (4) vienne au contact de l'élément de carrosserie (3), le projecteur (2) étant situé en partie avant de véhicule et l'élément de carrosserie étant une aile (3) du véhicule, **caractérisé en ce que** l'organe d'indexage (5) comporte une patte de fixation (6), parallèle à l'axe longitudinal du véhicule, et située à l'arrière du projecteur (2), le pion (7) et la patte flexible (8) étant implantés sur ladite patte de fixation (6), et du même coté.

2. Système d'indexage selon la revendication 1, **caractérisé en ce que** la patte de fixation (6) présente une surface inférieure (10) plane, le pion (7) étant droit et implanté selon une direction perpendiculaire à ladite surface (10), et **en ce que** la patte flexible (8) prend naissance à l'extrémité libre dudit pion (7), en étant dirigée vers ladite surface (10).

3. Système d'indexage selon la revendication 2, **caractérisé en ce que** le pion (7) et la patte flexible (8) sont alignés selon une direction parallèle à l'axe longitudinal du véhicule, ledit pion (7) et ladite patte (8) faisant entre eux un angle aigu, inférieur à 45°.

4. Système d'indexage selon la revendication 3, **caractérisé en ce que** la patte flexible (8) s'étend entre le pion (7) et le projecteur (7).

5. Système d'indexage selon l'une quelconque des revendications 3 ou 4, **caractérisé en ce que** la patte flexible (8) présente des aptitudes à la déformation élastique, de sorte qu'elle est apte à se rapprocher du pion (7) au moment de l'insertion de l'organe d'indexage (5) dans le trou (13), tout en présentant une résistance vis-à-vis de ce déplacement.

6. Système d'indexage selon l'une quelconque des revendications 3 à 5, **caractérisé en ce que** le pion (7) présente une section étoilée à quatre branches (11) s'inscrivant dans un carré, deux branches (11) successives étant perpendiculaires entre elles, et **en ce que** le trou (13) a la forme d'un rectangle, dont les grands cotés sont parallèles à l'axe longitudinal du véhicule, et sont séparés par une distance sensiblement égale au coté du carré.

7. Système d'indexage selon la revendication 5, **caractérisé en ce que** la patte flexible (8) possède une légère incurvation, pour favoriser l'introduction de l'organe (5) dans le trou (13).

## Claims

1. System (1) for locating a headlight (2) on a bodywork element (3) of a motor vehicle, said headlight (2) comprising a housing and a lens (4), and said locating system using a locating member (5) secured to the headlight (2) and provided with a stud (7), able to be inserted into a hole (13) in the bodywork element (3), said locating member (5) being in a single piece and comprising a flexible lug (8) which is able to deform when the locating member (5) is introduced into the hole (13), in order to move the headlight (2) until the lens (4) comes into contact with the bodywork element (3), the headlight (2) being situated at the front part of the vehicle and the bodywork element being a wing (3) of the vehicle, **characterised in that** the locating member (5) comprises a fixing lug (6) parallel to the longitudinal axis of the vehicle and situated at the rear of the headlight (2), the stud (7) and the flexible lug (8) being located on said fixing lug (6), and on the same side.

2. Locating system according to claim 1, **characterised in that** the fixing lug (6) has a flat lower surface (10), the stud (7) being straight and located in a direction perpendicular to said surface (10), and **in that** the flexible lug (8) is rooted at the free end of said stud (7) and is directed towards said surface (10).

3. Locating system according to claim 2, **characterised in that** the stud (7) and the flexible lug (8) are aligned in a direction parallel to the longitudinal axis of the vehicle, said stud (7) and said lug (8) forming an acute angle between them of less than 45°.

4. Locating system according to claim 3, **characterised in that** the flexible lug (8) extends between the stud (7) and the headlight (2).

5. Locating system according to either one of claims 3 or 4, **characterised in that** the flexible lug (8) is able to deform elastically, so that it is able to move closer to the stud (7) when the locating member (5) is inserted into the hole (13), while offering resistance to this movement.

6. Locating system according to any one of claims 3 to 5, **characterised in that** the stud (7) has a star-shaped cross section with four arms (11) fitting in a square, two successive arms (11) being perpendicular to each other, and **in that** the hole (13) is in the form of a rectangle, the large sides of which are parallel to the longitudinal axis of the vehicle and are separated by a distance substantially equal to the side of the square.

7. Locating system according to claim 5, **characterised in that** the flexible lug (8) has a slight curvature in order to assist the introduction of the member (5) into the hole (13).

## Patentansprüche

1. Indexierungssystem (1) eines Scheinwerfers (2) auf einem Karosserieelement (3) eines Kraftfahrzeuges, wobei der besagte Scheinwerfer (2) ein Gehäuse und eine Scheibe (4) umfasst, und das besagte Indexierungssystem ein Indexierungsorgan (5) einsetzt, welches an dem Scheinwerfer (2) befestigt ist und mit einem Stift (7) versehen ist, welches geeignet ist, in ein Loch (13) des Karosserieelements (3) eingefügt zu werden, wobei das besagte Indexierungsorgan (5) einstückig ist und eine biegsame Klaue (8) aufweist, welche geeignet ist, sich bei der Einführung des Indexierungsorgans (5) in das Loch (13) zu verformen, um den Scheinwerfer (2) so weit zu bewegen, bis die Scheibe (4) mit dem Karosserieelement (3) in Berührung kommt, wobei der Scheinwerfer (2) sich an dem Vorderteil des Fahrzeugs befindet und das Karosserieelement ein Flügel (3) des Fahrzeugs ist, **dadurch gekennzeichnet, dass** das Indexierungsorgan (5) eine Befestigungsklaue (6) umfasst, welche parallel zu der Längsachse des Fahrzeugs ist und sich auf der Hinterseite des Scheinwerfers (2) befindet, wobei der Stift (7) und die biegsame Klaue (8) auf der besagten Befestigungsklaue (6) und auf derselben Seite angeordnet sind.

2. Indexierungssystem nach Anspruch 1, **dadurch gekennzeichnet, das** die Befestigungsklaue (6) eine untere, ebene Fläche (10) aufweist, wobei der Stift (7) gerade ist und in einer zu der besagten Fläche (10) senkrechten Richtung angeordnet ist, und **dadurch** dass die biegsame Klaue (8) ihren Anfangspunkt an dem Ende des besagten Stiftes (7) hat und zu der besagten Fläche (10) hin gerichtet ist.

3. Indexierungssystem nach Anspruch 2, **dadurch gekennzeichnet, dass** der Stift (7) und die biegsame Klaue (8) parallel zu der Längsachse des Fahrzeugs ausgerichtet sind, wobei der besagte Stift (7) und die besagte Klaue (8) miteinander einen spitzen Winkel bilden, der kleiner als 45° ist.

4. Indexierungssystem nach Anspruch 3, **dadurch gekennzeichnet, dass** die biegsame Klaue (8) sich zwischen dem Stift (7) und dem Scheinwerfer (2) erstreckt.

5. Indexierungssystem nach einem der Ansprüche 3 oder 4, **dadurch gekennzeichnet, dass** die biegsame Klaue (8) elastisch verformbar ist, so dass sie geeignet ist, dem Stift (7) bei der Einführung des Indexierungsorgans (5) in das Loch (13) näher zu kommen und dennoch dieser Bewegung gegenüber einen Widerstand zu leisten.

6. Indexierungssystem nach einem der Ansprüche 3 bis 5, **dadurch gekennzeichnet, dass** der Stift (7) einen sternförmigen Querschnitt mit vier Spitzen (11) aufweist, welche in einem Quadrat gebildet sind, wobei zwei aufeinanderfolgende Spitzen (11) rechtwinklig zueinander sind und dass das Loch (13) die Form eines Rechteckes hat, dessen lange Seiten parallel zu der Längsachse des Fahrzeugs sind und deren Entfernung zueinander wesentlich der Seite des Quadrates entspricht.

7. Indexierungssystem nach Anspruch 5, **dadurch gekennzeichnet, dass** die biegsame Klaue (8) auch eine leichte Krümmung besitzt, um die Einführung des Organs (5) in das Loch (13) zu begünstigen.
